# EUROPÄISCHE PATENTSCHRIFT

(11) **EP 0 991 158 B1**
(45) Veröffentlichungstag und Bekanntmachung des Hinweises auf die Patenterteilung: **21.04.2004**
(21) Anmeldenummer: 99113009.7
(22) Anmeldetag: 06.07.1999
(51) Int. Cl.: H02G 3/18

(54) **Geräteaufnahme für eine Unterflurgerätedose**
Appliance reception for underfloor apparatus box
Une réception d'appareil pour boîtier pour appareillage installé sous plancher

(30) Priorität: 01.10.1998 DE 19845335
(43) Veröffentlichungstag der Anmeldung: 05.04.2000
(73) Patentinhaber: Novar GmbH, 72458 Albstadt (DE)
(72) Erfinder: Mellies, Nils-Ove, 51674 Wiehl (DE); Raschke, Jörg, 51674 Wiehl (DE)
(74) Vertreter: Patentanwälte Ruff, Wilhelm, Beier, Dauster & Partner

(56) Entgegenhaltungen:
- CH-A- 677 425
- DE-A- 2 552 005
- US-A- 5 455 388
- US-A- 5 796 037

## Beschreibung

Die Erfindung betrifft eine Geräteaufnahme für eine Unterflurgerätedose nach dem Oberbegriff des Patentanspruchs 1.

Geräteaufnahmen dieser Art sind in der Form sogenannter Gerätebecher bekannt, die aus Kunststoff hergestellt sind und in denen die in eine Unterflurgerätedose einzusetzenden Installationsgeräte, wie beispielsweise Steckdosen, vollkommen verdrahtet vormontierbar sind, ehe die Gerätebecher dann in die Unterflurgerätedosen eingesetzt werden (Katalog 30/57 'Elektro-Installations-Systeme' der Firma Albert Ackermann GmbH + Co. KG, Gummersbach, Druckvermerk 1108/4.94, Seiten 147 und 148).

Bei diesen bekannten Bauarten werden nach dem Durchführen der Leitungen durch entsprechende Zugentlastungsöffnungen der Gerätebecher die Sockel der Installationsgeräte verdrahtet und im Gerätebecher an dafür vorgesehenen Befestigungsstellen verschraubt. Es werden dann die Abdeckplatten aufgelegt und durch Verschrauben der Installationsgeräteeinsätze auf dem Gerätebecher befestigt. Die Befestigungsvorgänge für die Gerätesockel und danach für die Abdeckplatten und die Geräteeinsätze sind relativ aufwendig. Zusätzlich steht durch vorgegebene Normbaumaße nur bedingt Raum für die Kabelverlegung zur Verfügung.

Bekannt ist es auch (DE 195 01 339 C1), Gerätebecher so auszubilden, daß die Installationsgeräteeinsätze nicht mehr durch Schrauben im Inneren der Gerätebecher befestigt werden müssen. Zu diesem Zweck sind dort am Boden der Gerätebecher elastische Haltebügel angebracht, die von Auflagen abstehen, die Anschlagflächen für die Unterseite der Sockel der Installationsgeräte bilden. Die Haftebügel übergreifen die Oberseite der Sockel mit Rasthaken, die sich durch eine von oben zugängige Betätigungslasche wieder lösen lassen, wenn das erforderlich ist.

Diesen Gerätebechern sind über Filmscharniere schwenkbare Deckel als Abdeckung zugeordnet, die beim Schließen über Rasthaken an der Wandung des Gerätebechers gehalten sind. An diesen Deckeln sind die Oberteile der Installationsgeräte eingerastet. Bei diesen Bauarten müssen die Installationsgeräte ebenso wie bei den mit Schraubbefestigung versehenen Gerätebechern, vor dem Einsetzen verdrahtet sein. Die Montage ist daher wegen der abstehenden Kabel nicht immer einfach.

Eine Geräteaufnahme der eingangs genannten Art ist aus der DE-A-2 552 005 bekannt. Dort ist ein Tragorgan in der Form einer mit einem rechteckigen Ausschnitt versehenen Platte vorgesehen, in den Klemmfedern verrastend eingreifen, die an gegenüberliegenden Seitenwänden der einzubauenden Installationsgeräte angeordnet sind. Das Tragorgan wird seinerseits an eine Abdeckplatte mit Hilfe von Rastfedern angebracht, die Raststellen an der Abdeckplatte hintergreifen. Auch dort ist die Montage relativ aufwendig. Eine Sicherung der Raststellung ist nicht vorgesehen.

Es ist daher die Aufgabe der vorliegenden Erfindung, nach einer Vereinfachung dieser Befestigungsvorgänge zu suchen und ein Lösen der Verrastung zu vermeiden.

Zur Lösung dieser Aufgabe werden bei einer Geräteaufnahme der eingangs genannten Art die kennzeichnenden Merkmale des Patentanspruchs 1 vorgesehen.
Durch diese Ausgestaltung wird eine Verdrahtung nach der Befestigung an der Abdeckplatte möglich. Bei der Einführung der Kabelanschlüsse in den Gerätebecher ist nicht auf eine Ausrichtung der Installationsgeräte zu achten. Dies erfolgt durch das Aufsetzen der Abdeckplatten auf den Gerätebecher. Die schraublose Montage der Installationsgeräte an der Geräteaufnahme ist äußerst einfach. Das Einsetzen der Geräteaufnahme in die Unterflurgerätedosen erfolgt in bekannter Weise.

Da die Außenseite der federnden Rasthaken, welche die Befestigungskragen der Installationsgeräte außen umfassen, bei aufgesetzten Abdeckplatten an der Wand einer Aussparung an der Innenseite der Wandung der Geräteaufnahme anliegt, wird ein Lösen der Verrastung unmöglich. Die Raststellen können mit Fixierzapfen kombiniert werden, die in Öffnungen der Befestigungskragen der Installationsgeräte eingreifen. Durch diese Ausgestaltung können die Installationsgeräte fest und verdrehsicher festgehalten werden.

In Weiterbildung der Erfindung können die Abdeckplatten ihrerseits aufrastbar ausgebildet und mit Rasteinrichtungen in der Form von federnden Rasthaken und Rastnasen versehen sein. Die Rastnasen können zweckmäßig an der Oberkante von nutartigen Ausnehmungen der Außenwände der Geräteaufnahme angeordnet sein, wobei diese Ausnehmungen an die Abmessungen der Rasthaken angepaßt sind. Durch diese Ausgestaltung werden Führungswände für die Rasthaken gebildet, die Bewegungen der Abdeckplatte quer zu der für das Einrasten notwendigen Bewegungsrichtung verhindern und die gleichzeitig zur Versteifung der Wandung der Geräteaufnahme dienen.

Den Raststellen und Rasteinrichtungen können Öffnungen in der Abdeckplatte zugeordnet sein, durch die ein Betätigungswerkzeug zum Öffnen der Rasthaken steckbar ist. Auf diese Weise wird auch eine Demontage ermöglicht. Für die Montage ist keinerlei Werkzeug notwendig.

Zumindest den Abdeckplatten, aber auch der Wandung der Geräteaufnahme können Einsetzöffnungen für Zugentlastungsklemmen zugeordnet sein, wobei dann, wenn die Geräteaufnahme in der Form eines Bechers vorliegt, bei dem die rahmenförmige Wandung durch einen Boden abgeschlossen ist, die Wandung mit herausbrechbaren Abschnitten versehen ist und im Bereich dieser Abschnitte die Einsetzöffnungen für Zugentlastungsklemmen vorgesehen sind. Diese Zugentlastungsklemmen schließlich können mit Raststiften versehen sein und mit diesen in Einsetzöffnungen ebenfalls ohne einen Schraubvorgang einsetzbar sein. Werden die Zugentlastungsklemmen selbst in der Art flexibler Kunststoffschellen mit einem verzahnten Bügelteil und einem diesen aufnehmenden Rastverschluß versehen, dann wird auch für das Anbringen der Zugentlastung kein Schraubvorgang erforderlich. Vorzugsweise sind die Zugentlastungsklemmen drehbar gelagert, um eine richtungsunabhängige Funktion gewährleisten zu können.

Die Erfindung ist anhand von Ausführungsbeispielen in der Zeichnung dargestellt und wird im folgenden beschrieben. Es zeigen:
- Fig. 1: die perspektivische Darstellung einer nach der Erfindung ausgestalteten Geräteaufnahme in Becherform,
- Fig. 2: eine auf ein Teil des Gerätebechers der Fig. 1 aufrastbaren Abdeckplatte,
- Fig. 3: eine andere Ausführungsform einer Abdeckplatte,
- Fig. 4: die Ansicht der Abdeckplatte der Fig. 2 von unten,
- Fig. 5: eine Zugentlastungsklemme,
- Fig. 6: eine dritte Variante einer Abdeckplatte, die den Gerätebecher der Fig. 1 vollständig überdeckt,
- Fig. 7: eine Darstellung, die den Befestigungsvorgang des Installationsgerätes an einer Abdeckplatte zeigt,
- Fig. 8: die Darstellung des an der Abdeckplatte angerasteten Installationsgerätes, und
- Fig. 9: eine vergrößerte Darstellung eines Teilbereiches der Fig. 8.

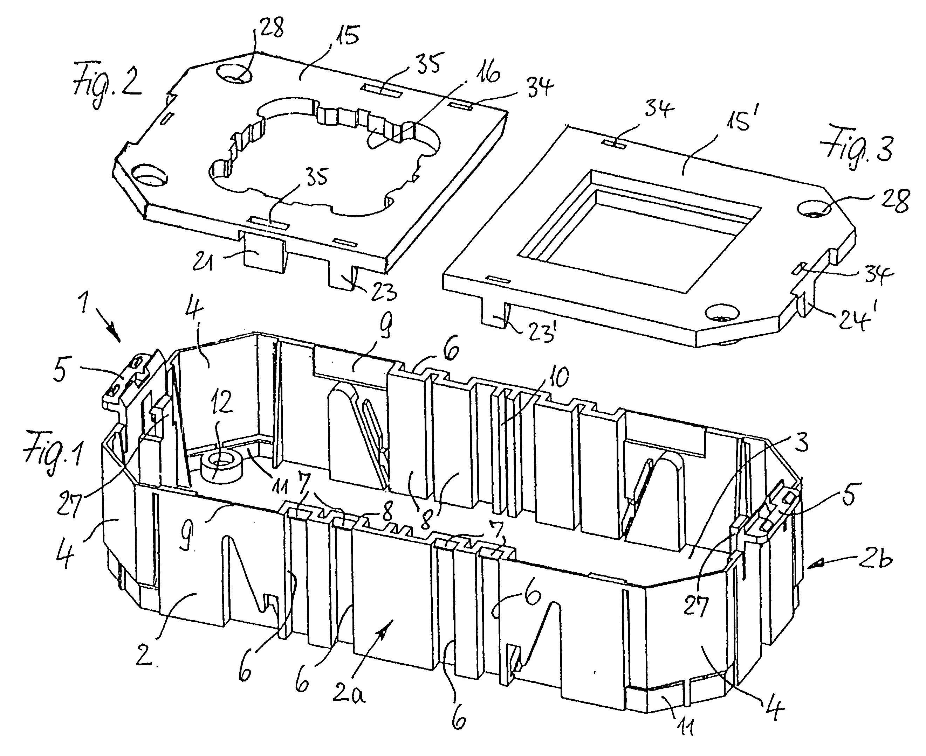

In der Fig. 1 ist eine aus Kunststoff hergestellte Geräteraufnahme in der Form eines Gerätebechers 1 gezeigt, der mit einer rahmenförmig umlaufenden Wandung 2 und mit einem diese unten abschließenden Boden 3 versehen ist. Der Gerätebecher 1 besitzt zwei parallel gegenüber verlaufende längere Seiten 2a und zwei schmalere Stirnseiten 2b, die über schräge Wandabschnitte 4 in die längeren Wandungen 2a übergehen. An den Stirnseiten 2b ist der Gerätebecher 1 mit nach außen abstehenden Laschen 5 versehen, die nach oben stehende Rastnasen 6 aufweisen und in bekannter Weise in leiterartig untereinander angeordnete Halteschlitze einer nicht gezeigten Unterflurgerätedose rastend eingehängt werden können.

Die seitlichen Wandungen 2a sind auf ihrer Außenseite mit nutartigen Vertiefungen 6 versehen, die an ihrem oberen Ende mit Rastnasen 7 versehen sind, die über den Nutboden etwas nach außen vorstehen. Diese Nuten 6 werden von in das Becherinnere hereinragenden Wandteilen 8 gebildet, die zur Versteifung der Wandung 2 dienen, wobei anschließend an den von der Quermittelebene des Gerätebechers am weitesten weggelegenen Wandteiles 8 eine dünnere Wandung 9 im Bereich der freien Oberkante des Gerätebechers 1 vorgesehen ist, auf deren Bedeutung noch eingegangen werden wird.

In der Quermittelebene des Gerätebechers 1 verlaufen an beiden Wandungen Führungsschlitze 10 die, in an sich bekannter Weise, zum Einsetzen einer Trennwand dienen, die den Innenraum des Gerätebechers 1 beispielsweise in ein für den Anschluß von Starkstrominstallationsgeräten dienendes Abteil und ein Abteil für den Anschluß von Schwachstromgeräten unterteilt.

Die Übergangswände 4 zwischen den Stirnwänden 2b und den Längswänden 2a sind mit geringerer Wandstärke ausgebildet. Sie lassen sich zum Durchführen von Kabelanschlüssen herausbrechen, und es ist im Bereich dieser herausbrechbaren Abschnitte 4 jeweils eine mit dem Boden 3 und einem stabileren unteren Wandteil 11 fest verbundene Einsetzöffnung 12 in Kreisringform vorgesehen, die zum Einsetzen des Raststiftes 13 einer Zugentlastungsklemme 14 dient, wie sie in der Fig. 5 gezeigt ist. Die Zugentlastungsklemme 14 ist mittels des Raststiftes 13 drehbar gelagert. Ein durch die Stelle des herausgebrochenen Wandabschnittes 4 durchgeführtes Kabel kann daher in der Zugentlastungsklemme 14 gefaßt und gehalten werden, ehe der Anschluß an das einzusetzende Installationsgerät vorgenommen wird.

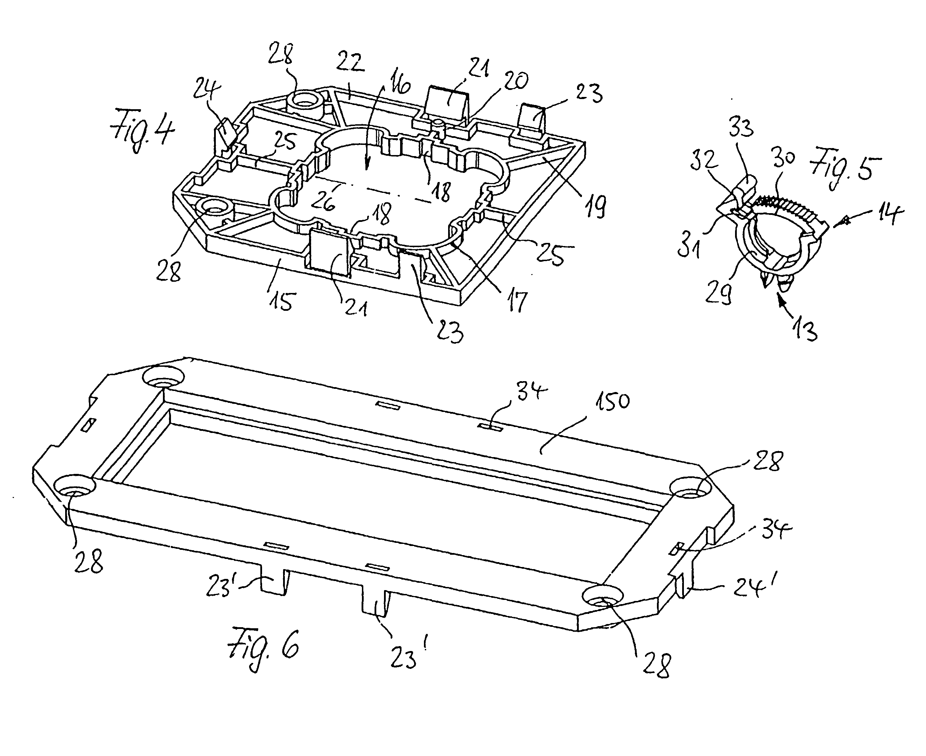

Die Fig. 2, die Fig. 4 und die Fig. 7 bis 9 zeigen nun eine Abdeckplatte 15, die in ihrer Mitte mit einer Öffnung 16 bekannter Art zum Einsetzen eines - in den Fig. 7 bis 9 auch gezeigten - Installationsgerätes 40 versehen ist, dessen Sokkel mit dem in seinen Abmessungen genormten Befestigungskragen 41 an dem aus Fig. 4 und 7 ersichtlichen inneren umlaufenden Rand 17 zur Anlage gebracht werden kann.

Dieser Rand 17 geht nach außen in Verstärkungsrippen 19 über, und er besitzt vier jeweils um 90° zueinander versetzte Wandteile 18, von denen zwei sich gegenüberliegend über einen kurzen Rippenteil in einen zylindrischen Fixierstift 20 übergehen, der oben konisch verjüngt ist. Benachbart zu diesem Fixierstift 20 ist ein federnder Rasthaken 21 vorgesehen, dessen nach innen vorstehende Rastnase 21a (Fig. 9) einen Abstand zu der Oberkante des Randes 17 und des außen um die Abdeckplatte 15 umlaufenden Randes 22 aufweist. Dieser Abstand ist auf die Dicke des in Fig. 4 nicht gezeigten, aber aus Fig. 7 bis 9 ersichtlichen Befestigungskragens 41 des ebenfalls in Fig. 4 nicht gezeigten Installationsgerätes 40 abgestimmt, und der Fixierstift 20 dringt beim Ansetzen des Befestigungskragens 41 in die sonst für die Schraubbefestigung vorgesehene Öffnung im Kragen ein. Wird daher das Installationsgerät mit seinem Kragen in der Fig. 4 von ober her gegen die Abdeckplatte 15 gedrückt, so schnappen die Rasthaken 21 außen um den Rand des Befestigungskragens herum, der durch den Fixierstift 20 in seiner Lage gesichert ist. Das Installationsgerät läßt sich auf diese Weise ohne einen Schraubvorgang an der Abdeckplatte befestigen, was im einzelnen noch anhand der Fig. 7 bis 9 deutlicher beschrieben werden wird.

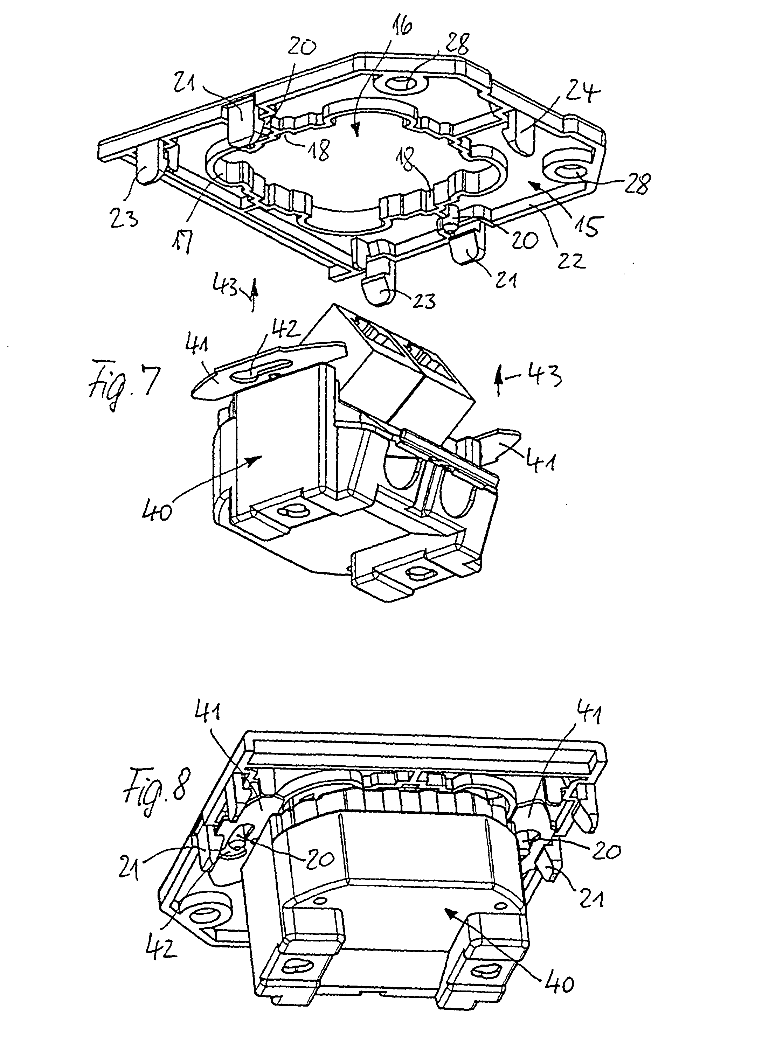

Die Abdeckplatte nach den Fig. 2, 4 und 7 - natürlich ebenso die Abdeckplatte nach Fig. 3 oder Fig. 6 - besitzt aber noch weitere Rasthaken 23 und 24, von denen die Rasthaken 23 symmetrisch zu einer durch die Mittelrippe 25 verlaufenden Längsmittelebene 26 angeordnet ist, während der dritte Rasthaken 24 in dieser Längsmittelebene liegt.

Die Rasthaken 23 und 24 sind so an der Abdeckplatte 15 verteilt angeordnet, daß die Rasthaken 23 in eine der Nuten 6 eingreifen und sich dort an den Nasen 7 verhaken, während der Rasthaken 24 in den Zwischenraum zwischen der Stirnwand 2b und einem auf deren Innenseite angeordneten Rasthaken 27 gelangt und sich mit diesem verhakt. Die Abmessungen der Nuten 6 sind so gewählt, daß die Rasthaken 23 seitlich in der Nut geführt werden. Die Abdeckplatte sitzt so, bei eingerasteten Rasthaken, sicher und fest auf dem Gerätebecher. Die Abdeckplatte 15 läßt sich auf diese Weise ohne einen Schraubvorgang mit dem Gerätebecher 1 verbinden. Wenn sie, wie vorher ausgeführt, mit einem verdrahteten und angeschlossenen Installationsgerät bestückt ist, dann kann der so mit dem Installationsgerät ausgerüstete Gerätebecher 1 in die zugeordnete Unterflurgerätedose eingehängt werden, ohne daß zur Befestigung irgendein Schraubvorgang notwendig wird.

Die Fig. 1 und die zugeordnete Fig. 2 machen auch deutlich, daß dann, wenn die Rasthaken 23 in die zugeordnete Nut 6 eingeführt sind und verrasten, der Rasthaken 21 mit dem daran befestigten Installationsgerät in die von der dünneren Wand 9 gebildete Aussparung innen hereingreift und so innerhalb des Gerätebechers 1 zu liegen kommt. Da die vom Befestigungskragen des Installationsgerätes abgewandte Außenseite an der Innenseite der Wand 9 in dieser Position anliegt, ist der Rasthaken in seiner Lage gesichert. Ein unbeabsichtigtes Lösten der Verrastung bei geschlossener Geräteaufnahme ist daher ausgeschlossen.

Die in der Fig. 3 gezeigte Abdeckplatte 15' ist hinsichtlich der Rasthaken 23' und 24' in gleicher Weise ausgebildet wie die Abdeckplatte 15. Sie kann mit anderen Installationsgeräten bestückt und dann ebenfalls auf den Gerätebecher aufgesetzt werden. Es ist natürlich auch möglich, die Abdeckplatte 15' zum Beispiel als Blindabdeckung auszubilden, wenn gar keine Einsetzöffnung in der Mitte vorhanden ist. Möglich ist es auch, eine zweite Abdeckplatte in der Art der Abdeckplatte 15 um 180° versetzt auf den Gerätebecher 1 aufzusetzen, oder die Abdeckplatte 150 der Fig. 6 aufzusetzen, die einteilig ist und mit sechs Rasthaken 23' bzw. 24' zur Befestigung am Gerätebecher 1 ausgerüstet ist.

Alle Abdeckplatten sind mit Einsetzöffnungen 28 in der Art der Einsetzöffnung 12 versehen, um die Möglichkeit zu schaffen, eine Zugentlastungsklemme 14 bei Bedarf auch an der Abdeckplatte anbringen zu können.

Die Zugentlastungsklemme 14 besteht, wie alle in der Zeichnung gezeigten Teile, ebenfalls aus Kunststoff, und sie besitzt einen etwa halbkreisförmigen Aufnahmeteil 29, an den auf einer Seite ein mit einer Außenverzahnung versehener Bügelteil 30 angesetzt ist. Dieser Bügelteil kann in eine Öffnung 31 eingesetzt und dort mit Hilfe von Zähnen 32 verklemmt werden, die an einem Gegenstück angeordnet sind, das mit einem Handhabungsteil 33 versehen ist, durch welches die Zähne 32 seitlich abhebbar sind, um den Bügel 30 zu lösen.

Alle Abdeckplatten sind mit schlitzartigen Öffnungen 34 bzw. 35 versehen, mit deren Hilfe und mit Hilfe eines durch diese Öffnungen durchführbaren Betätigungswerkzeuges die Rasthaken 23 bzw. 21 aus ihrer Raststellung herausgedrückt werden können, um eine Demontage der Abdeckplatte 15, 15' oder 150 zu bewirken.

Die Fig. 7 läßt zunächst ein handelsübliches Installationsgerät 40 erkennen, das beispielsweise zum Anschluß von Datenleitungen dienen kann. Dieses Installationsgerät 40 ist mit einem Befestigungskragen 41 versehen, dessen Abmessungen genormt sind, um den Einbau in beliebige Aufnahmen, z.B. auch in Unterputzdosen, zu ermöglichen. Der Befestigungskragen 41 besitzt daher auch eine schlüssellochartig ausgebildete Öffnung 42, die dazu ausgenutzt werden kann, das Installationsgerät durch Schrauben zu befestigen.

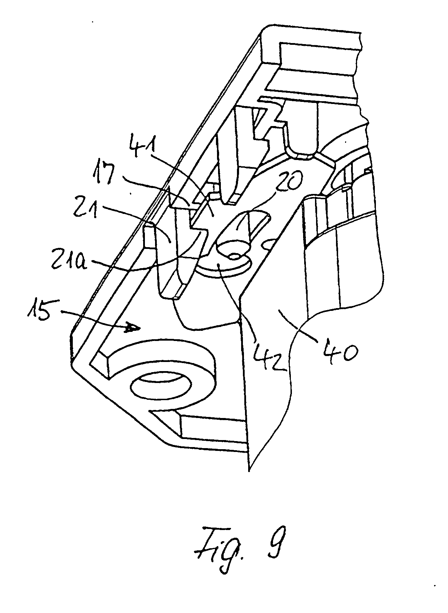

Im vorliegenden Fall allerdings ist eine Schraubbefestigung nicht notwendig. Wie die Pfeile 43 andeuten, wird das Installationsgerät 40 nach oben gegen die Unterseite der Abdeckplatte 20 gedrückt, so daß dann, wie vorher schon erläutert, die Fixierstifte 20 in die Öffnung 42 eintreten und die Rasthaken 21 außen um den Befestigungskragen 41 herumgreifen und das Installationsgerät 40 so fest an der Abdeckplatte 15 sichern, wie das aus den Fig. 8 und insbesondere aus Fig. 9 deutlich erkennbar ist. Der Hakenteil 21a des Rasthakens 21 liegt dabei an der Unterseite des Befestigungskragens 41 an und drückt diesen gegen den Rand 17. Eine entsprechende Geräteabdeckkappe wird dann von der Oberseite der Abdeckplatte 15 her in bekannter Weise auf den herausragenden Teil des Installationsgerätes aufgesetzt. Beim Aufsetzen der Abdeckplatte 15 mit dem daran befestigten Installationsgerät nach Fig. 8 kommen die Rasthaken 21, wie vorher schon erwähnt wird, in den Bereich der von der dünneren Wand 9 des Gerätebechers 1 gebildeten Aussparung. Da sie dadurch an einer Bewegung nach außen gehindert sind, bleibt der Befestigungskragen 41 und damit das Installationsgerät 40 in seiner Befestigungslage innerhalb des Gerätebechers 1 gesichert.

## Patentansprüche

1. Geräteaufnahme für eine Unterflurgerätedose, die mit einer rahmenförmig umlaufenden Wandung (2) und mit von dieser nach außen abragenden Rastlaschen (5) versehen ist, mit den Rastlaschen in Halteschlitze der Unterflurgerätedose einhängbar und mit Befestigungsmitteln für einzusetzende Installationsgeräte und mit Abdeckplatten (15, 15', 150) hierfür ausgerüstet ist,
**dadurch gekennzeichnet, daß**
die Befestigungsmittel (21) für die Installationsgeräte als den Abdeckplatten (15, 15', 150) unmittelbar zugeordnete Rasthaken (21) zum Aufrasten der Installationsgeräte ausgebildet sind, die dann, wenn die Abdeckplatten (15, 15', 150) auf der Wandung (2) aufsitzen, mit ihrer von dem Befestigungskragen abgewandten Außenseite an der Wand (9) einer Aussparung in der Wandung (2) der Geräteaufnahme anliegen und so in ihrer Lage gesperrt sind.

2. Geräteaufnahme nach Anspruch 1, **dadurch gekennzeichnet, daß** die federnden Rasthaken (21) die Befestigungskragen der Installationsgeräte außen umfassen.

3. Geräteaufnahme nach Anspruch 1, **dadurch gekennzeichnet, daß** an der Öffnung (16) zum Einsetzen eines Installationsgerätes ein umlaufender Rand (17) vorgesehen ist, der zur Anlage des Befestigungskragens des Installationsgerätes dient und nach außen in Verstärkungsrippen (19) übergeht.

4. Geräteaufnahme nach Anspruch 1, **dadurch gekennzeichnet, daß** die Rasthaken mit Fixierzapfen (20) kombiniert sind, die in Öffnungen der Befestigungskragen der Installationsgeräte eingreifen.

5. Geräteaufnahme nach Anspruch 1, **dadurch gekennzeichnet, daß** die Abdeckplatten auf die umlaufende Wandung (2) aufrastbar und mit Rasteinrichtungen in der Form von federnden Rasthaken (23) versehen sind, die Rastnasen (7) an der Wand (2) der Geräteaufnahme (1) hintergreifen.

6. Geräteaufnahme nach Anspruch 5, **dadurch gekennzeichnet, daß** die Rastnasen (7) an der Oberkante von nutartigen und an die Abmessungen der Rasthaken (23) angepaßten Ausnehmungen (6) der Wandung (2) angeordnet sind.

7. Geräteaufnahmen nach Anspruch 6, **dadurch gekennzeichnet, daß** die Ausnehmungen (6) in profilierten Wandteilen (8) gebildet sind, die zur Versteifung der Wandung (2) dienen.

8. Geräteaufnahme nach den Ansprüchen 1 und 5, **dadurch gekennzeichnet, daß** den Rasthaken (21 und 23) Öffnungen (34, 35) in der Abdeckplatte (15, 15', 150) zugeordnet sind, durch die ein Betätigungswerkzeug zum Öffnen der Rasthaken steckbar ist.

9. Geräteaufnahme nach Anspruch 1, **dadurch gekennzeichnet, daß** zumindest den Abdeckplatten (15, 15', 150) Einsetzöffnungen (12, 28) für Zugentlastungsklemmen (14) zugeordnet sind, die insbesondere drehbar gelagert sind.

10. Geräteaufnahme nach Anspruch 9 in der Form eines Gerätebechers, bei dem die rahmenförmige Wandung (2) durch einen Boden (3) abgeschlossen ist, **dadurch gekennzeichnet, daß** die Wandung (2) mit herausbrechbaren Abschnitten (4) versehen ist und daß im Bereich dieser Abschnitte (4) an den Abdeckplatten (15, 15', 150) oder an der Wandung (2) die Einsetzöffnungen (12, 28) für Zugentlastungsklemmen (14) vorgesehen sind.

11. Geräteaufnahme nach Anspruch 9, **dadurch gekennzeichnet, daß** die Zugentlastungsklemmen (14) mit Raststiften (13) versehen sind und mit diesen in die Einsetzöffnungen (12, 28) einsetzbar sind.

12. Geräteaufnahme nach Anspruch 11, **dadurch gekennzeichnet, daß** die Zugentlastungsklemmen (14) in der Art flexibler Kunststoffschellen mit einem verzahnten Bügelteil (30) und einem diesen aufnehmenden Rastverschluß (32, 33)ausgebildet sind.

## Claims

1. Appliance receptacle for an underfloor appliance box, which receptacle is provided with a frame-shaped encircling wall (2) and with locking tongues (5) projecting outwards from the wall, can be suspended by way of the locking tongues in retaining slots in the underfloor appliance box and is fitted with mounting means for installation appliances which are to be inserted and with cover plates (15, 15', 150) for these,
**characterised in that**
the mounting means (21) for the installation appliances are formed as locking hooks (21), which are directly associated with the cover plates (15, 15', 150), for locking onto installation appliances, which hooks, when the cover plates (15, 15', 150) are seated on the wall (2), lie by way of their outside, which is remote from the mounting collar, against the wall (9) of a recess in the wall (2) of the appliance receptacle and are thus locked in their position.

2. Appliance receptacle according to Claim 1, **characterised in that** the resilient locking hooks (21) externally embrace the mounting collars of the installation appliances.

3. Appliance receptacle according to Claim 1, **characterised in that** an encircling rim (17) is provided at the opening (16) for inserting an installation appliance, which rim serves for the abutment of the mounting collar of the installation appliance and passes outwards into reinforcing ribs (19).

4. Appliance receptacle according to Claim 1, **characterised in that** the locking hooks are combined with fixing pins (20) which engage in openings in the mounting collars of the installation appliances.

5. Appliance receptacle according to Claim 1, **characterised in that** the cover plates can be locked onto the encircling wall (2) and are provided with locking devices in the form of resilient locking hooks (23) which engage behind locking lugs (7) at the wall (2) of the appliance receptacle (1).

6. Appliance receptacle according to Claim 5, **characterised in that** the locking lugs (7) are disposed at the top edge of groove-like cutouts (6), which are adapted to the dimensions of the locking hooks (23), in the wall (2).

7. Appliance receptacle according to Claim 6, **characterised in that** the cutouts (6) are formed in profiled wall parts (8) which serve to stiffen the wall (2).

8. Appliance receptacle according to Claims 1 and 5, **characterised in that** openings (34, 35) in the cover plate (15, 15', 150) are associated with the locking hooks (21 and 23), through which openings an actuating tool for opening the locking hooks can be passed.

9. Appliance receptacle according to Claim 1, **characterised in that** insertion openings (12, 28) for strain relief clamps (14), which are in particular rotatably mounted, are associated at least with the cover plates (15, 15', 150).

10. Appliance receptacle according to Claim 9 in the form of an appliance cup, in which the frame-shaped wall (2) is closed by a bottom (3), **characterised in that** the wall (2) is provided with break-out portions (4), and that the insertion openings (12, 28) for strain relief clamps (14) are provided in the region of these portions (4) at the cover plates (15, 15', 150) or at the wall (2).

11. Appliance receptacle according to Claim 9, **characterised in that** the strain relief clamps (14) are provided with locking pins (13) and can be inserted by way of these in the insertion openings (12, 28).

12. Appliance receptacle according to Claim 11, **characterised in that** the strain relief clamps (14) are in the form of flexible plastics clips with a toothed bow part (30) and a locking fastener (32, 33) which accommodates the latter.

## Revendications

1. Logement d'appareil pour un boîtier d'appareillage encastré, qui est pourvu d'une paroi (2) s'étendant en forme de châssis tout autour et avec des languettes d'encliquetage (5) faisant saillie de celle-ci vers l'extérieur, pouvant être accroché avec les languettes d'encliquetage dans des fentes de retenue du boîtier d'appareillage et équipé de moyens de fixation pour des appareils d'installation à mettre en place et avec des plaques de recouvrement (15, 15', 150), **caractérisé en ce que** les moyens de fixation (21) pour les appareils d'installation sont réalisés comme crochets d'encliquetage (21) associés directement aux plaques de recouvrement (15, 15', 150) pour l'enclenchement des appareils d'installation qui, lorsque les plaques de recouvrement (15, 15', 150) reposent sur la paroi (2), s'appliquent avec leur côté extérieur éloigné du col de fixation à la paroi (9) d'un évidement dans la paroi (2) du logement d'appareil et sont ainsi verrouillés dans leur position.

2. Logement d'appareil selon la revendication 1, **caractérisé en ce que** les crochets d'encliquetage élastiques (21) entourent de l'extérieur les cols de fixation des appareils d'installation.

3. Logement d'appareil selon la revendication 1, **caractérisé en ce qu'**il est prévu à l'ouverture (16) pour la mise en place d'un appareil d'installation un bord (17) s'étendant tout autour qui sert à l'application du col de fixation de l'appareil d'installation et se transforme vers l'extérieur en des nervures de renforcement (19).

4. Logement d'appareil selon la revendication 1, **caractérisé en ce que** les crochets d'encliquetage sont combinés avec des tenons de fixation (20) qui s'engagent dans des ouvertures des cols de fixation des appareils d'installation.

5. Logement d'appareil selon la revendication 1, **caractérisé en ce que** les plaques de recouvrement peuvent être enclenchées sur la paroi (2) s'étendant tout autour et sont pourvues d'installations d'encliquetage sous la forme de crochets d'encliquetage élastiques (23) qui passent derrière des ergots d'encliquetage (7) à la paroi (2) du logement d'appareil (1).

6. Logement d'appareil selon la revendication 5, **caractérisé en ce que** les ergots d'encliquetage (7) sont disposés à l'arête supérieure d'évidements (6) de la paroi (2) en forme de rainure et adaptés aux dimensions des crochets d'encliquetage (23).

7. Logement d'appareil selon la revendication 6, **caractérisé en ce que** les évidements (6) sont ménagés dans des parties de paroi profilées (8) qui servent à renforcer la paroi (2).

8. Logement d'appareil selon les revendications 1 et 5, **caractérisé en ce que** sont associées aux crochets d'encliquetage (21 et 23) des ouvertures (34, 35) dans la plaque de recouvrement (15, 15', 150) à travers lesquelles peut être inséré un outil d'actionnement pour ouvrir les crochets d'encliquetage.

9. Logement d'appareil selon la revendication 1, **caractérisé en ce que** sont associées au moins aux plaques de recouvrement (15, 15', 150) des ouvertures d'insertion (12, 28) pour des pinces de décharge de traction (14) qui sont logées en particulier d'une manière rotative.

10. Logement d'appareil selon la revendication 9, sous la forme d'un boîtier d'appareil, où la paroi (2) en forme de châssis est fermée par un fond (3), **caractérisé en ce que** la paroi (2) présente des tronçons (4) pouvant être cassés, et **en ce que** dans la zone de ces tronçons (4) sont prévues aux plaques de recouvrement (15, 15', 150) ou à la paroi (2) les ouvertures d'insertion (12, 28) des pinces de décharge de traction (14).

11. Logement d'appareil selon la revendication 9, **caractérisé en ce que** les pinces de décharge de traction (14) sont pourvues de broches d'arrêt (13) et sont insérables avec celles-ci dans les ouvertures d'insertion (12, 28).

12. Logement d'appareil selon la revendication 11, **caractérisé en ce que** les pinces de décharge de traction (14) sont réalisées à la manière de colliers flexibles en matériau synthétique avec une partie d'étrier dentée (30) et une fermeture à crans (32, 33) recevant celle-ci.
